# FASCICULE DE BREVET EUROPEEN

(11) **EP 3 802 086 B1**
(45) Date de publication et mention de la délivrance du brevet: **06.07.2022**
(21) Numéro de dépôt: 19726608.3
(22) Date de dépôt: 17.05.2019
(51) Int. Cl.: B29D 30/38, B29D 30/70

(54) **PROCÉDÉ DE FABRICATION D'UNE COUCHE DE RIGIDIFICATION POUR LA FABRICATION D'UN BANDAGE PNEUMATIQUE RENFORCÉ**
VERFAHREN ZUR HERSTELLUNG EINER VERSTEIFUNGSSCHICHT ZUR FERTIGUNG EINER VERSTÄRKTEN REIFENHÜLLE
METHOD FOR PRODUCING A STIFFENING LAYER FOR THE MANUFACTURE OF A REINFORCED TYRE CASING

(30) Priorité: 29.05.2018 FR 1854596
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: BESSAC, Christophe, 63040 Clermond Ferrand Cedex 9 (FR); ROUBY, Mickael, 63040 Clermond Ferrand Cedex 9 (FR)
(74) Mandataire: Roussy, Delphine
(86) Numéro de dépôt international: PCT/EP2019/062883
(87) Numéro de publication internationale: WO 2019/228831

(56) Documents cités:
- WO-A1-2016/156434
- WO-A1-2016/202702

## Description

### DOMAINE TECHNIQUE DE L'INVENTION

La présente invention se rapporte à un procédé de fabrication d'une couche de rigidification pour un bandage pneumatique et, plus particulièrement, une telle couche de rigidification destinée à être montée entre la bande de roulement et les nappes sommet de travail.

### ARRIÈRE-PLAN TECHNIQUE DE L'INVENTION

Il a déjà été proposé, dans la demande WO2016/202702, une couche de rigidification destinée à être montée entre la bande de roulement et les nappes sommet de travail. Une telle couche comporte une nappe de rigidification constituée d'éléments filaires de renfort rigides en compression orientés selon la direction axiale afin de combiner une très bonne adhérence de la bande de roulement sur le sol qui est l'apanage des mélanges de caoutchouteux communément qualifiés de « mélanges mous », avec une faible flexion de la bande de roulement du bandage pneumatique, c'est-à-dire avec un faible basculement des blocs de sculpture, pour conserver une importante surface de contact avec le sol.

Cette couche de rigidification en compression est très efficace mais peut subir ponctuellement des déformations plastiques au niveau de ses éléments filaires de renfort rigides en cas de fortes contraintes exercées sur le bandage pneumatique qui peut rendre le bandage pneumatique moins efficace. De plus, suivant le type de bandage pneumatique, il est nécessaire d'adapter la rigidité en compression de la couche de rigidification en développant une architecture dédiée (longueur des éléments filaires, diamètre des éléments filaires, etc.).

### RÉSUME DE L'INVENTION

L'objectif de la présente invention est de proposer un procédé de fabrication d'une couche de rigidification permettant d'éviter la déformation plastique de ses éléments filaires et autorisant une adaptation simplifiée de sa rigidité.

À cet effet, l'invention se rapporte à un procédé de fabrication d'une couche de rigidification pour la fabrication d'un bandage pneumatique renforcé comprenant les étapes suivantes :
- Fabriquer une bande à base de matériau caoutchoutique cru dans laquelle sont noyés des éléments filaires, les éléments filaires étant espacés les uns des autres de manière parallèle et orientés sensiblement transversalement par rapport à la longueur de la bande ;
- Segmenter les éléments filaires par évidement sélectif de matière le long de la bande afin de former la couche de rigidification.

Avantageusement selon l'invention, le procédé forme une couche de rigidification formée de segments d'éléments filaires qui évite tout flambage de ces derniers qui pourrait induire une déformation plastique. Ainsi, une fois intégrée à un bandage pneumatique, la compression de la couche de rigidification est transmise de segment en segment de chaque élément filaire par cisaillement du matériau caoutchoutique cuit présent entre les segments ce qui empêche tout flambage propre à déformer plastiquement les éléments filaires. On comprend notamment que la longueur réduite des segments par rapport à celle de l'élément filaire avant segmentation permet de résoudre en partie ce problème de flambage.

En outre, le procédé par son évidement sélectif permet à une même bande une adaptation simplifiée de la rigidité de la couche de rigidification. En effet, l'évidement sélectif, c'est-à-dire notamment l'espace qui sera laissé entre les segments à l'issue de l'étape de segmentation, permet d'obtenir plusieurs valeurs de rigidité à partir d'une même bande pour pouvoir fabriquer une ou plusieurs couches de rigidification sur une même bande. La bande segmentée peut ainsi par exemple être produite en continue puis stockée sous forme de rouleau afin d'obtenir une ou plusieurs couches de rigidification de rigidité identique ou de rigidités différentes. Par conséquent, suivant le type de bandage pneumatique à fabriquer, le rouleau de bande segmentée est ensuite coupé à la longueur souhaitée pour former la couche de rigidification selon l'invention directement à la bonne longueur et selon la rigidité adaptée au bandage pneumatique à fabriquer.

L'invention peut également comporter l'une ou plusieurs des caractéristiques optionnelles suivantes, prises seules ou en combinaison.

Chaque évidement sélectif peut comporter un contour qui lorsqu'il est projeté sur une face de la bande est de forme sensiblement carrée, rectangulaire ou elliptique. La géométrie et les dimensions du contour permettent de choisir la rigidité finale de la couche de rigidification à partir de celle de la bande avant segmentation. On comprend donc que la rigidité de la couche de rigidification est inférieure à celle de la bande avant segmentation.

Lors de l'étape de segmentation, chaque élément filaire est coupé en plusieurs segments espacés selon une longueur prédéterminée. Suivant le type de bandage pneumatique à fabriquer, la couche de rigidification peut ainsi comporter entre deux et douze segments d'un même élément filaire.

Selon une variante particulière, lors de l'étape de segmentation, les éléments filaires sont segmentés deux par deux, c'est-à-dire qu'un même évidement sélectif segmente deux éléments filaires de la bande ce qui permet d'avoir deux fois moins d'évidements sélectifs à effectuer pour une même longueur de couche de rigidification.

Selon une variante particulière, lors de l'étape de segmentation, les éléments filaires sont segmentés en quinconce, c'est-à-dire que les évidements sélectifs ne sont pas alignés circonférentiellement. Un segment d'un élément filaire comporte ainsi une portion (selon une distance axiale) en recouvrement selon la direction circonférentielle avec au moins une portion d'un segment d'un élément filaire adjacent.

Selon une variante particulière, chaque évidement sélectif forme des perforations dans la bande ce qui permet de simplifier et rendre plus rapide le procédé de fabrication.

L'étape de segmentation selon l'invention peut ainsi être réalisée par poinçonnage, par rayonnement destructif ou par découpe à jet d'eau.

De plus, l'invention se rapporte également à un procédé de fabrication d'un bandage pneumatique renforcé comportant les étapes suivantes :
- Fabriquer une carcasse à base de matériau caoutchoutique cru ;
- Monter une bande de roulement à base de matériau caoutchoutique cru sur la carcasse afin de former un bandage pneumatique à base de matériau caoutchoutique cru ;
- Réticuler en moulant à chaud le bandage pneumatique à base de matériau caoutchoutique cru afin de le rendre élastique et de modeler sa forme externe ;
**caractérisé en ce que** le procédé comporte en outre, entre l'étape de fabrication de la carcasse et l'étape de montage de la bande de roulement, une étape de montage sur la carcasse d'une couche de rigidification obtenue à partir du procédé tel que décrit ci-dessus permettant, pendant l'étape de moulage, de remplir chaque évidement, formé lors de l'étape de segmentation de la bande, par du matériau caoutchoutique et d'obtenir le bandage pneumatique renforcé.

Ainsi, une fois l'étape de moulage terminée, la compression de la couche de rigidification est transmise de segment en segment de chaque élément filaire par cisaillement du matériau caoutchoutique cuit présent entre les segments ce qui empêche tout flambage propre à déformer plastiquement les éléments filaires.

Avantageusement selon l'invention, l'ajout de la couche de rigidification contribue à un fort couplage mécanique avec les nappes sommet de travail en formant une portion indéformable, et ce particulièrement au centre du bandage pneumatique. Ainsi lorsque le pneumatique est centrifugé, le centre du pneumatique au voisinage du plan équateur ne se déforme pas (ou peu) en transférant totalement (ou principalement) les déformations (ou extensions radiales) sur les épaules du bandage pneumatique sous l'effet des forces d'inertie. De plus, la compression de la couche de rigidification selon l'invention empêche tout flambage propre à déformer plastiquement ses éléments filaires. Le bandage pneumatique garde donc toute son efficacité même en cas de forces d'inertie remarquablement élevées.

Bien entendu, de manière à ne pas augmenter le volume du pneumatique, la couche de rigidification selon l'invention peut se substituer avantageusement à une partie des matériaux présents en général à la base de la bande de roulement.

En outre, l'étape de fabrication de la carcasse peut comporter les phases suivantes :
- Fabriquer des matériaux caoutchoutiques crus, une nappe carcasse, deux tringles, une gomme intérieure imperméable à l'air et des nappes sommet de travail ;
- Confectionner la carcasse à partir des matériaux caoutchoutiques crus, de la nappe carcasse, des deux tringles, de la gomme intérieure imperméable à l'air et des nappes sommet de travail.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- La figure 1 est une vue en coupe d'un bandage pneumatique renforcé obtenu par un procédé de fabrication selon l'invention ;
- La figure 2 est une vue schématique de dessus en écorché du bandage pneumatique renforcé obtenu par le procédé de fabrication selon l'invention ;
- La figure 3 est une vue en perspective d'une machine destinée à mettre en oeuvre un procédé de fabrication d'une couche de rigidification selon l'invention ;
- La figure 4 est une vue partielle en perspective d'une bande obtenue selon le procédé de fabrication d'une couche de rigidification selon l'invention ;
- La figure 5 est une vue en coupe partielle de la bande obtenue selon le procédé de fabrication d'une couche de rigidification selon l'invention.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

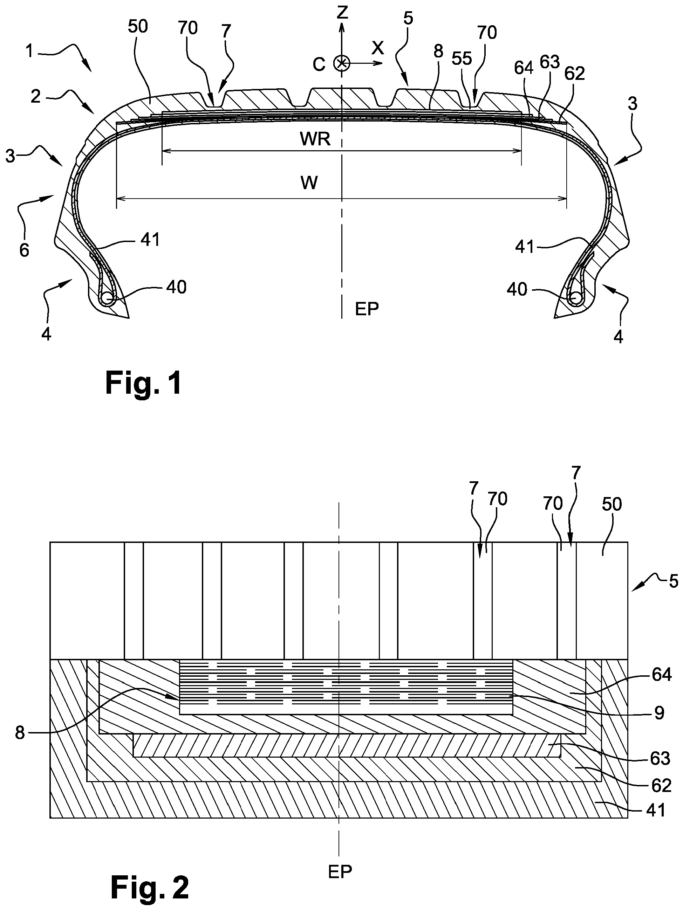

Sur la figure 1, on a représenté des axes C, X, Z orthogonaux entre eux correspondant aux orientations habituelles circonférentielle (C), axiale (X) et radiale (Z) d'un bandage pneumatique 1. Par « bandage pneumatique », on entend tous les types de bandages élastiques soumis à une pression interne.

Par « matériau caoutchoutique », ou « gomme », on entend un matériau à base d'une composition réticulable comprenant un élastomère, par exemple diénique. On appelle « matériau caoutchoutique cru » ou « gomme crue » un tel matériau avant réticulation.

L'invention se rapporte à un procédé de fabrication d'un bandage pneumatique 1 renforcé. Plus précisément, le procédé de fabrication a pour but de monter une nouvelle couche de rigidification 8 selon l'invention entre une bande 5 de roulement habituelle et des nappes 62, 63 sommet de travail habituelles de manière à obtenir le bandage pneumatique 1 renforcé.

On comprend donc que, par rapport à un procédé habituel de fabrication, le procédé de fabrication comporte en outre, entre l'étape de fabrication de la carcasse et l'étape de montage de la bande de roulement, une étape de montage d'une couche de rigidification 8 selon l'invention d'un nouveau type.

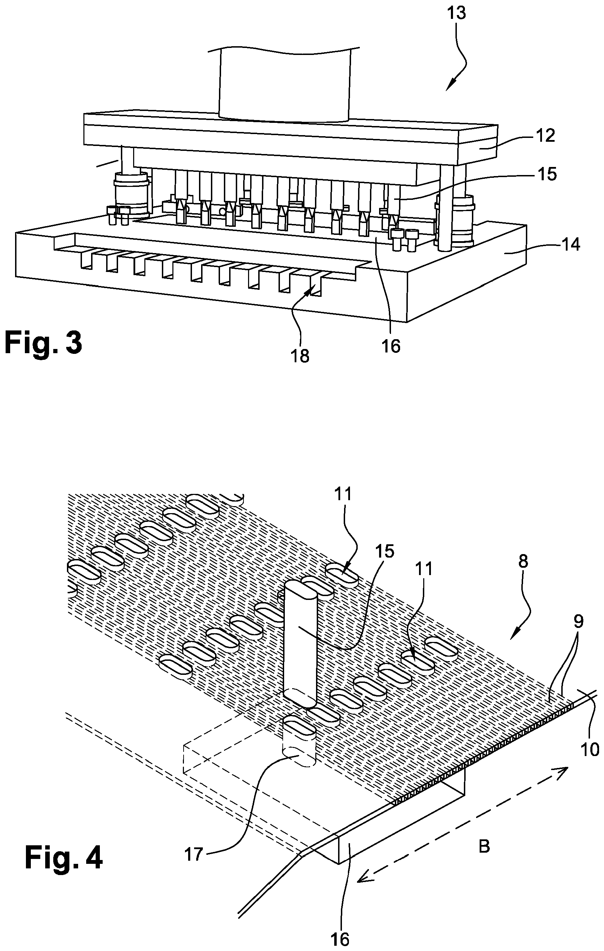

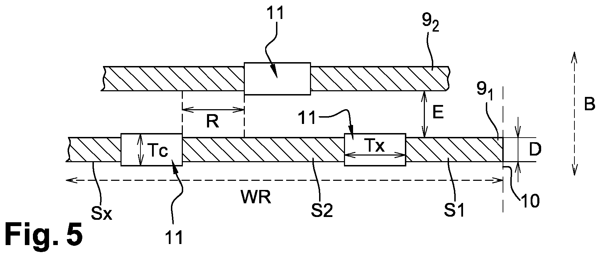

Ainsi, l'invention se rapporte également à un procédé de fabrication d'une nouvelle couche de rigidification 8. Le procédé de fabrication comprend une première étape destinée à fabriquer une bande 10 à base de matériau caoutchoutique cru dans laquelle sont noyés des éléments filaires 9. Comme visible aux figures 4 et 5, les éléments filaires 9 sont distribués dans la bande 10 de manière sensiblement parallèle entre eux, distants d'un espace E les uns entre les autres et orientés sensiblement transversalement par rapport à la longueur B de la bande 10. Un tel type de bande 10 peut être fabriqué selon les mêmes méthodes que les nappes 62, 63 sommet de travail en l'adaptant toutefois à l'orientation particulière et à la nature des éléments filaires 9.

En effet, les éléments filaires 9 de la couche de rigidification 8 comme par exemple des câbles, sont orientés essentiellement dans la direction axiale X comme la nappe carcasse 41. Ainsi, il a été trouvé que l'effet de rigidification selon l'invention est sensiblement obtenu avec un angle compris entre 50 degrés et 90 degrés, et de préférence un angle supérieur à 85 degrés.

De plus, suivant le type de bandage pneumatique 1 renforcé prévu, la couche de rigidification 8 comporte des éléments filaires 9, dits de renforcement, qui peuvent être du type monofilamentaire (un seul fil) ou câblé (plusieurs fils) qui sont enrobés dans la bande 10 en gomme, dite de calandrage, les liant entre eux pour former un semi-fini de fabrication pour son intégration dans une architecture de bandage pneumatique 1 cru pour le renforcer. Ainsi, suivant les caractéristiques choisies du bandage pneumatique 1 renforcé, la composition de la gomme de la bande 10 et la nature (matériau, nombre de fils, etc.) et les dimensions (diamètre de chaque fil, diamètre D de chaque élément filaire 9, etc.) peuvent être adaptées.

Bien entendu, la première étape de fabrication de la bande 10 comportant les éléments filaires 9 ne saurait se limiter à l'exemple ci-dessus et d'autres types de fabrication bien connus de l'homme du métier peuvent être envisagées en substitution.

Avantageusement, le procédé de fabrication de la couche de rigidification 8 comporte une deuxième étape destinée à segmenter les éléments filaires 9 par évidement sélectif de matière le long de la bande 10 afin de former la nouvelle couche de rigidification 8.

Ainsi, le procédé selon l'invention forme avantageusement une couche de rigidification 8 formées de segments S1, S2, Sx d'éléments filaires 9 qui évite tout flambage de ces derniers qui pourrait induire une déformation plastique. Ainsi, une fois intégrée à un bandage pneumatique, la compression de la couche de rigidification 8 est transmise de segment S1, S2, Sx en segment segments S2, S1, Sx de chaque élément filaire 9 par cisaillement du matériau caoutchoutique cuit présent entre les segments S1, S2, Sx ce qui empêche tout flambage propre à déformer plastiquement les éléments filaires 9. On comprend notamment que la longueur réduite des segments S1, S2, Sx par rapport à celle WR de l'élément filaire 9 avant segmentation permet de résoudre en partie ce problème de flambage.

En outre, le procédé par son évidement sélectif permet à une même bande une adaptation simplifiée de la rigidité de la couche de rigidification 8. En effet, l'évidement sélectif, c'est-à-dire notamment l'espace Tx qui sera laissé entre les segments S1, S2, Sx à l'issue de l'étape de segmentation, permet d'obtenir plusieurs valeurs de rigidité à partir d'une même bande 10 pour pouvoir fabriquer une ou plusieurs couches de rigidification 8 sur une même bande 10. La bande 10 segmentée peut ainsi par exemple être produite en continue puis stockée sous forme de rouleau afin d'obtenir une ou plusieurs couches de rigidification 8 de rigidité identique ou de rigidités différentes. Par conséquent, suivant le type de bandage pneumatique 1 renforcé à fabriquer, le rouleau de bande 10 segmentée est ensuite coupé à la longueur souhaitée pour former la nouvelle couche de rigidification 8 selon l'invention directement à la bonne longueur et selon la rigidité adaptée au bandage pneumatique 1 renforcé à fabriquer.

Chaque évidement sélectif peut comporter un contour, d'une largeur Tc selon la direction circonférentielle C et d'une longueur Tx selon la direction axiale X, qui lorsqu'il est projeté sur une face supérieure de la bande 10 comme par exemple le long de l'épaisseur selon la direction radiale Z de la bande 10. Ce contour peut être de forme sensiblement carrée, rectangulaire ou elliptique. Préférentiellement, le contour est de forme rectangulaire.

La géométrie et les dimensions du contour permettent de choisir la rigidité finale de la couche de rigidification 8 à partir de celle de la bande 10 avant segmentation. On comprend donc que la rigidité de la couche de rigidification 8 est inférieure à celle de la bande 10 avant segmentation.

Lors de l'étape de segmentation, chaque élément filaire 9 est coupé en plusieurs segments S1, S2, Sx espacés selon une longueur Tx prédéterminée. Suivant le type de bandage pneumatique 1 renforcé à fabriquer, la couche de rigidification 8 peut ainsi comporter entre deux et douze segments S1, S2, Sx d'un même élément filaire 9.

Selon une première variante particulière, lors de l'étape de segmentation, les éléments filaires sont segmentés deux par deux, c'est-à-dire qu'un même évidement sélectif segmente deux éléments filaires 9 de la bande 10 comme illustré aux figures 2 et 4. Cela permet d'avoir deux fois moins d'évidements sélectifs à effectuer pour une même longueur de couche de rigidification 8.

Selon une deuxième variante particulière, lors de l'étape de segmentation, les éléments filaires 9 sont segmentés en quinconce, c'est-à-dire que les évidements sélectifs ne sont pas alignés selon la direction circonférentielle C comme illustré aux figures 2 et 4. Un segment S1, S2, Sx d'un élément filaire 9₁ comporte ainsi une portion R (selon une distance axiale X) en recouvrement selon la direction circonférentielle (parallèle à la longueur B de la bande 10) avec au moins une portion d'un segment S2, S1, Sx d'un élément filaire 9₂ adjacent comme mieux visible à la figure 5.

Selon une troisième variante particulière, chaque évidement sélectif forme des perforations 11 à travers la bande 10 ce qui permet de simplifier et rendre plus rapide le procédé de fabrication de la couche de rigidification 8.

À titre nullement limitatif, l'étape de segmentation selon l'invention peut ainsi être réalisée par poinçonnage, par rayonnement destructif ou par découpe à jet d'eau. Un exemple de représentation de matériel pour mettre en oeuvre le procédé de fabrication de la couche de rigidification 8 selon l'invention est présenté aux figures 3 et 4 pour une étape de segmentation par poinçonnage.

Dans cet exemple, l'étape de segmentation utilise une presse 13 dont les deux plateaux opposés 12, 14 comportent respectivement au moins un poinçon 15 et une matrice 16 de forme correspondante à chaque poinçon 15. Dans l'exemple de la figure 3, on peut apercevoir que le plateau supérieur 12 porte neuf poinçons 15 dont l'outil permet de réaliser des perforations 11 cylindriques à section elliptique comme illustré à la figure 4. On précise ici que la presse pourrait être remplacée par tout élément mécanique alimenté par un générateur d'énergie, mécanique ou hydraulique ou autre, et qui permette de développer un effort et une course.

On peut également voir que les poinçons 15 sont tous alignés et ont une hauteur sensiblement identique. Toutefois, pour éviter d'imposer une contrainte trop élevée à la presse 13, il peut être envisagé que les poinçons 15 soient à des hauteurs différentes afin de ne pas réaliser les évidements sélectifs en même temps. À titre d'exemple, l'extrémité des poinçons 15 les plus centraux pourrait être plus près du plateau 12 que ceux les plus latéraux afin de perforer les extrémités de la bande 10 puis, seulement après, le centre de la bande 10. Il peut également être envisagé, en complément ou en substitution, que les poinçons 15 soient distribués en quinconce sur au moins deux lignes afin de réaliser les première, deuxième et troisième variantes expliquées ci-dessus en même temps comme illustré à la figure 4. De manière complémentaire, chaque matrice 16 sur le plateau 14 inférieur comporte une lumière 17 destinée à recueillir les matières découpées (métal des éléments filaires 9 et gomme de la bande 10) par son poinçon 15 associé pour être évacuées sous la matrice 16 par les rainures inférieures 18.

En outre, les différents poinçons peuvent présenter une surface d'extrémité inclinée, correspondant à la face d'attaque du poinçon. Cette surface peut être plane, ou peut être une surface gauche, convexe ou concave.

La couche de rigidification 8 ainsi obtenue est utilisée pour le procédé de fabrication d'un bandage pneumatique 1 renforcé selon l'invention. Le procédé comportant les étapes habituelles suivantes :
- Fabriquer une carcasse 6 à base de matériau caoutchoutique cru ;
- Monter une bande 5 de roulement à base de matériau caoutchoutique cru sur la carcasse 6 afin de former un bandage pneumatique à base de matériau caoutchoutique cru ;
- Réticuler en moulant à chaud le bandage pneumatique à base de matériau caoutchoutique cru afin de le rendre élastique et de modeler sa forme externe.

Avantageusement selon l'invention, le procédé comporte en outre, entre l'étape de fabrication de la carcasse et l'étape de montage de la bande de roulement, une étape de montage d'une couche de rigidification 8 obtenue à partir du procédé de fabrication tel que décrit ci-dessus. On comprend donc que, pendant l'étape de moulage à chaud, chaque évidement ou perforation 11, formé lors de l'étape de segmentation de la bande 10, pourra être rempli par du matériau caoutchoutique et ainsi obtenir le bandage pneumatique 1 renforcé.

Ainsi, une fois l'étape de moulage terminée, la compression de la couche de rigidification 8 est transmise de segment S1, S2, Sx en segment S2, S1, Sx de chaque élément filaire 9 par cisaillement du matériau caoutchoutique cuit présent entre les segments S1, S2, Sx ce qui empêche tout flambage propre à déformer plastiquement les éléments filaires 9.

Avantageusement selon l'invention, l'ajout de la couche de rigidification 8 contribue à un fort couplage mécanique avec les nappes 62, 63 sommet de travail (et éventuellement de frette 64) en formant une portion indéformable, particulièrement au centre du bandage pneumatique 1 renforcé. Ainsi lorsque le bandage pneumatique 1 renforcé est centrifugé, le centre du bandage pneumatique 1 renforcé au voisinage du plan équateur EP ne se déforme pas (ou peu) en transférant totalement (ou principalement) les déformations (ou extensions radiales) sur les épaules ou flancs extérieurs 3 du bandage pneumatique 1 renforcé sous l'effet des forces d'inertie. Cet avantage en complément de l'absence de flambage permet au bandage pneumatique 1 renforcé de garder toute son efficacité même en cas de forces d'inertie remarquablement élevées.

Bien entendu, de manière à ne pas augmenter le volume du bandage pneumatique 1 renforcé, la couche de rigidification 8 selon l'invention peut se substituer avantageusement à une partie des matériaux présents en général à la base de la bande de roulement 5.

En outre, de manière habituelle l'étape de fabrication de la carcasse peut comporter les phases suivantes :
- Fabriquer des matériaux caoutchoutiques crus, une nappe 41 carcasse, deux tringles 40, une gomme intérieure imperméable à l'air et des nappes 62, 63 sommet de travail ;
- Confectionner la carcasse 6 à partir des matériaux caoutchoutiques crus, de la nappe 41 carcasse, des deux tringles 40, de la gomme intérieure imperméable à l'air et des nappes 62, 63 sommet de travail.

On peut voir aux figures 1 et 2 un exemple de bandage pneumatique 1 renforcé obtenu selon les procédés de fabrication de l'invention. Le bandage pneumatique 1 renforcé comprend un sommet 2, deux flancs 3 reliés chacun à un bourrelet 4. Le sommet 2 est relié de chaque côté à l'extrémité radialement extérieure de chacun des deux flancs 3. Le sommet 2 comporte une bande de roulement 5. La figure indique un plan équatorial EP, plan perpendiculaire à l'axe de rotation du pneumatique, situé à mi-distance des deux bourrelets 4 et passant par le milieu de l'armature de ceinture.

Chaque bourrelet 4 comporte une tringle 40, une nappe 41 carcasse (également visible à la figure 2) est enroulée autour de chaque tringle 40. La nappe 41 carcasse est axiale et est de manière connue en soi constituée par des câbles (dans ce cas de mise en oeuvre, des câbles textiles) disposés sensiblement parallèlement les uns aux autres et s'étendant d'un bourrelet à l'autre de façon telle qu'ils forment un angle compris entre 80° et 90° avec le plan équatorial EP.

Le sommet 2 comporte (voir figures 1 et 2) une armature de ceinture comportant ladite nappe de carcasse 41 et deux nappes de ceinture 62, 63. De façon très classique, les nappes de ceinture 62, 63 sont formés par des câbles métalliques arrangés parallèlement entre eux. De façon bien connue, les éléments de renforcement que forment les câbles de la nappe de carcasse 41 et les câbles des nappes de ceinture 62, 63 sont orientés selon au moins trois directions différentes de façon à former une triangulation. L'armature de ceinture est de largeur axiale W, celle-ci étant mesurée d'une extrémité axiale à l'autre de la plus large (62) des nappes de ceinture, c'est-à-dire la plus large des nappes formant une triangulation avec la ou les nappes de carcasse.

La bande de roulement 5 comprend une pluralité de blocs de sculpture 50. Deux blocs de sculpture 50 axialement adjacents sont séparés par une rainure 7 s'étendant au moins en partie circonférentiellement. Chaque rainure 7 est délimitée radialement vers l'intérieur par un fond 70 de rainure.

L'armature de ceinture du bandage pneumatique 1 renforcé comporte une nappe 64 de frette constituée de renforts de frettage formés par des fibres organiques ou polyamide aromatique ou en aramide ou sont formés de câbles hybrides contenant des fibres d'aramide, lesdits renforts de frettage formant, avec la direction circonférentielle un angle au plus égal à 5°. Cette couche est disposée indifféremment radialement à l'intérieur ou à l'extérieur de la couche de rigidification 8. La nappe 64 de frette comporte une seule couche de renforts de frettage. En variante d'exécution, la nappe de frette est constituée de plusieurs couches de renforts de frettage.

La couche de rigidification 8 permet ainsi de limiter les flexions dans le plan et hors plan du sommet du bandage pneumatique 1 renforcé sous un effort transversal en augmentant d'une part la rigidité de flexion méridienne du sommet (hors plan), ce qui limite le basculement des blocs 50 de sculptures par flexion, et en augmentant d'autre part la rigidité de flexion sur chant du sommet (dans le plan radial).

À titre nullement limitatif, les figures 1 et 2 montrent un exemple de bandage pneumatique 1 renforcé comportant une couche de rigidification 8 avec des éléments filaires 9 arrangés parallèlement par rapport à la nappe 41 carcasse, c'est-à-dire selon un angle de 90 degrés selon la direction circonférentielle C. Les éléments filaires 9 présentent un diamètre D égal par exemple à 4,26 mm, une largeur WR de 47 mm avec des segments S1, S2, Sx espacés selon une distance Tx égale à 6 mm. Enfin, les éléments filaires 9 sont distants d'un espace E les uns entre les autres selon une valeur de 0,9 mm. La nappe 64 de frette est disposée radialement à l'extérieur des nappes 62, 63 sommet de travail, et est disposée radialement intérieurement à la couche de rigidification 8. La couche de rigidification 8 est donc, dans cette variante, disposée radialement juste à l'extérieur de la nappe 64 de frette. La couche de rigidification 8 est disposée radialement et axialement sous au moins une rainure 7 de la bande 5 de roulement, donc sous le fond 70 de la rainure 7.

La couche de rigidification 8 s'étend axialement sur une longueur WR. À titre d'exemple, la longueur WR peut par exemple représenté 70% de la largeur W de l'armature sommet. De façon avantageuse, la couche de rigidification 8 est proche de la fibre neutre mécanique de l'ensemble structurel formé par le sommet 2 du bandage pneumatique 1 renforcé. Dans un autre mode de réalisation, au moins 70% de ladite longueur WR de la couche de rigidification 8 est disposée d'un côté du plan médian EP, à savoir le côté destiné à être monté à l'extérieur du véhicule, c'est-à-dire celui le plus sollicité dans des virages pris à vitesse soutenue. Dans certaines mises en oeuvre de l'invention, le bandage pneumatique 1 renforcé est alors asymétrique. Cependant, ceci n'a aucun caractère impératif, le bandage pneumatique 1 renforcé obtenu selon les procédés de l'invention pouvant très bien être symétrique axialement. De préférence, la couche de rigidification 8 s'étend sur une longueur WR valant au minimum 50% de la largeur axiale W de l'armature de ceinture et de préférence au moins 70%. Avantageusement, la couche de rigidification 8 peut également s'étendre sur une longueur WR valant au maximum 100% de la largeur axiale W de l'armature de ceinture.

L'invention trouve une application tout particulièrement intéressante lorsque les rainures 7 ou certaines d'entre elles s'étendent circonférentiellement. Il peut très bien s'agir de rainures 7 qui ne sont pas orientées exactement circonférentiellement mais peuvent être obliques par rapport au plan équatorial EP. Comme les moyens obtenus par l'invention permettent de combattre efficacement la tendance au basculement de blocs 50 de sculpture et la tendance à la flexion du sommet 2 lorsque la bande 5 de roulement est en gomme molle de façon à favoriser l'adhérence, et que la flexion du sommet 2 et le basculement des blocs 50 de sculpture est particulièrement préjudiciable sur sollicitations du bandage pneumatique 1 renforcé dans le sens transversal, l'invention trouve un terrain d'application tout particulièrement intéressant en présence de rainures au moins en partie orientées circonférentiellement. Bien entendu, il peut en outre y avoir des rainures 7 orientées principalement axialement, et dans ce cas l'invention permet de combattre le basculement des blocs 50 de sculpture en cas de sollicitation longitudinale, provenant d'un couple important, par exemple en freinage d'urgence.

L'invention s'applique à tout type de bandage pneumatique, notamment ceux destinés à équiper des véhicules à moteur de type tourisme, SUV (« Sport Utility Vehicles »), deux roues (notamment motos), avions, véhicules industriels choisis parmi camionnettes, « Poids-lourds » - c'est-à-dire métro, bus, engins de transport routier (camions, tracteurs, remorques), véhicules hors-la-route tels qu'engins agricoles ou de génie civil -, ou autres véhicules de transport ou de manutention.

L'invention n'est pas limitée aux modes de réalisation et variantes présentés et d'autres modes de réalisation et variantes apparaîtront clairement à l'homme du métier. Il est notamment possible de modifier la forme des évidements sélectifs, les natures et dimensions de la bande 10 et des éléments filaires 9 sans sortir du cadre de i'invention qui n'est limité que par les revendications annexées.

## Revendications

1. Procédé de fabrication d'une couche (8) de rigidification pour la fabrication d'un bandage pneumatique (1) renforcé comprenant les étapes suivantes :
- fabriquer une bande (10) à base de matériau caoutchoutique cru dans laquelle sont noyés des éléments filaires (9), les éléments filaires (9) étant espacés les uns des autres de manière parallèle et orientés sensiblement transversalement par rapport à la longueur (B) de la bande (10) ;
- segmenter les éléments filaires (9) par évidement sélectif de matière le long de la bande (10) afin de former la couche (8) de rigidification.

2. Procédé selon la revendication précédente, dans lequel chaque évidement sélectif comporte un contour qui lorsqu'il est projeté sur une face de la bande (10) est sensiblement carré, rectangulaire ou elliptique.

3. Procédé selon l'une quelconque des revendications précédentes, dans lequel, lors de l'étape de segmentation, chaque élément filaire (9) est coupé en plusieurs segments (S1, S2, Sx) espacés selon une longueur (Tx) prédéterminée.

4. Procédé selon l'une quelconque des revendications précédentes, dans lequel, lors de l'étape de segmentation, les éléments filaires (9) sont segmentés deux par deux.

5. Procédé selon l'une quelconque des revendications précédentes, dans lequel, lors de l'étape de segmentation, les éléments filaires (9) sont segmentés en quinconce.

6. Procédé selon l'une quelconque des revendications précédentes, dans lequel chaque évidement sélectif forme des perforations (11) à travers la bande (10).

7. Procédé selon l'une quelconque des revendications précédentes, dans lequel l'étape de segmentation est réalisée par poinçonnage, par rayonnement destructif ou par découpe à jet d'eau.

8. Procédé de fabrication d'un bandage pneumatique (1) renforcé comportant les étapes suivantes :
- fabriquer une carcasse (6) à base de matériau caoutchoutique cru ;
- monter une bande (5) de roulement à base de matériau caoutchoutique cru sur la carcasse (6) afin de former un bandage pneumatique à base de matériau caoutchoutique cru ;
- réticuler en moulant à chaud le bandage pneumatique à base de matériau caoutchoutique cru afin de le rendre élastique et de modeler sa forme externe ;
**caractérisé en ce que** le procédé comporte en outre, entre l'étape de fabrication de la carcasse (6) et l'étape de montage de la bande (5) de roulement, une étape de montage sur la carcasse (6) d'une couche de rigidification (8) obtenue à partir du procédé de fabrication selon l'une quelconque des revendications précédentes permettant, pendant l'étape de moulage, de remplir chaque évidement, formé lors de l'étape de segmentation de la couche de rigidification, par du matériau caoutchoutique et d'obtenir le bandage pneumatique (1) renforcé.

9. Procédé selon la revendication précédente, dans lequel l'étape de fabrication de la carcasse (6) comporte les phases suivantes :
- Fabriquer des matériaux caoutchoutiques crus, une nappe (41) carcasse, deux tringles (40), une gomme intérieure imperméable à l'air et des nappes (62, 63) sommet de travail ;
- Confectionner la carcasse (6) à partir des matériaux caoutchoutiques crus, de la nappe (41) carcasse, des deux tringles (40), de la gomme intérieure imperméable à l'air et des nappes (62, 63) sommet de travail.

## Patentansprüche

1. Verfahren zur Herstellung einer Versteifungsschicht (8) zur Herstellung eines verstärkten Luftreifens (1), welches die folgenden Schritte umfasst:
- Herstellen eines Streifens (10) auf der Basis von Rohkautschukmaterial, in welches fadenförmige Elemente (9) eingebettet sind, wobei die fadenförmigen Elemente (9) parallel voneinander beabstandet sind und im Wesentlichen quer in Bezug auf die Länge (B) des Streifens (10) ausgerichtet sind;
- Segmentieren der fadenförmigen Elemente (9) durch selektive Aussparung von Material entlang des Streifens (10), um die Versteifungsschicht (8) zu bilden.

2. Verfahren nach dem vorhergehenden Anspruch, wobei jede selektive Aussparung eine Kontur aufweist, welche, wenn sie auf eine Seite des Streifens (10) projiziert wird, im Wesentlichen quadratisch, rechteckig oder elliptisch ist.

3. Verfahren nach einem der vorhergehenden Ansprüche, wobei im Schritt der Segmentierung jedes fadenförmige Element (9) in mehrere Segmente (S1, S2, Sx) zerschnitten wird, die um eine vorbestimmte Länge (Tx) beabstandet sind.

4. Verfahren nach einem der vorhergehenden Ansprüche, wobei im Schritt der Segmentierung die fadenförmigen Elemente (9) paarweise segmentiert werden.

5. Verfahren nach einem der vorhergehenden Ansprüche, wobei im Schritt der Segmentierung die fadenförmigen Elemente (9) gegeneinander versetzt segmentiert werden.

6. Verfahren nach einem der vorhergehenden Ansprüche, wobei jede selektive Aussparung Perforationen (11) durch den Streifen (10) hindurch bildet.

7. Verfahren nach einem der vorhergehenden Ansprüche, wobei der Schritt der Segmentierung durch Stanzen, durch destruktive Strahlung oder durch Wasserstrahlschneiden durchgeführt wird.

8. Verfahren zur Herstellung eines verstärkten Luftreifens (1), welches die folgenden Schritte umfasst:
- Herstellen einer Karkasse (6) auf der Basis von Rohkautschukmaterial;
- Anbringen eines Laufstreifens (5) auf der Basis von Rohkautschukmaterial auf der Karkasse (6), um einen Luftreifen auf der Basis von Rohkautschukmaterial zu bilden;
- Vernetzen des Luftreifens auf der Basis von Rohkautschukmaterial durch Warmformen, um ihn elastisch zu machen und seine äußere Form zu modellieren;
**dadurch gekennzeichnet, dass** das Verfahren außerdem, zwischen dem Schritt der Herstellung der Karkasse (6) und dem Schritt der Anbringung des Laufstreifens (5), einen Schritt der Anbringung einer Versteifungsschicht (8), welche mit einem Verfahren zur Herstellung nach einem der vorhergehenden Ansprüche erhalten wurde, auf der Karkasse (6) umfasst, der es ermöglicht, während des Formungsschrittes jede Aussparung, die im Schritt der Segmentierung der Versteifungsschicht gebildet wurde, mit Kautschukmaterial zu füllen und den verstärkten Luftreifen (1) zu erhalten.

9. Verfahren nach dem vorhergehenden Anspruch, wobei der Schritt der Herstellung der Karkasse (6) die folgenden Phasen umfasst:
- Herstellen von Rohkautschukmaterialien, einer Karkassenlage (41), zweier Wulstkerne (40), einer luftundurchlässigen Innendichtschicht und von Arbeitsscheitellagen (62, 63);
- Konfektionieren der Karkasse (6) aus den Rohkautschukmaterialien, der Karkassenlage (41), den zwei Wulstkernen (40), der luftundurchlässigen Innendichtschicht und den Arbeitsscheitellagen (62, 63).

## Claims

1. Method for manufacturing a stiffening layer (8) for the manufacture of a reinforced tyre (1), comprising the following steps of:
- manufacturing a strip (10) based on uncured rubber material in which filamentary elements (9) are embedded, the filamentary elements (9) being spaced apart from one another in a parallel manner and being oriented substantially transversely with respect to the length (B) of the strip (10);
- segmenting the filamentary elements (9) by selective cutaway of material along the strip (10) in order to form the stiffening layer (8).

2. Method according to the preceding claim, wherein each selective cutaway has a contour which, when it is projected onto a face of the strip (10), is substantially square, rectangular or elliptical.

3. Method according to either one of the preceding claims, wherein, during the segmenting step, each filamentary element (9) is cut into a plurality of segments (S1, S2, Sx) that are spaced apart by a predetermined length (Tx).

4. Method according to any one of the preceding claims, wherein, during the segmenting step, the filamentary elements (9) are segmented in pairs.

5. Method according to any one of the preceding claims, wherein, during the segmenting step, the filamentary elements (9) are segmented in a staggered manner.

6. Method according to any one of the preceding claims, wherein each selective cutaway forms perforations (11) through the strip (10).

7. Method according to any one of the preceding claims, wherein the segmenting step is effected by punching, by destructive radiation or by water-jet cutting.

8. Method for manufacturing a reinforced tyre (1), having the following steps of:
- manufacturing a carcass (6) based on uncured rubber material;
- mounting a tread (5) based on uncured rubber material on the carcass (6) in order to form a tyre based on uncured rubber material;
- crosslinking the tyre based on uncured rubber material by hot moulding the latter in order to make it elastic and to model the external shape thereof;
**characterized in that** the method also has, between the step of manufacturing the carcass (6) and the step of mounting the tread (5), a step of mounting on the carcass (6) a stiffening layer (8) obtained using the manufacturing method according to any one of the preceding claims, making it possible, during the moulding step, to fill each cutaway, formed during the step of segmenting the stiffening layer, with rubber material and to obtain the reinforced tyre (1).

9. Method according to the preceding claim, wherein the step of manufacturing the carcass (6) has the following phases of:
- Manufacturing uncured rubber materials, a carcass ply (41), two bead wires (40), an air-impermeable inner liner and working crown plies (62, 63);
- Building the carcass (6) from the uncured rubber materials, the carcass ply (41), the two bead wires (40), the air-impermeable inner liner and the working crown plies (62, 63).
